# EUROPEAN PATENT SPECIFICATION

(11) **EP 2 815 838 B1**
(45) Date of publication and mention of the grant of the patent: **28.09.2016**
(21) Application number: 13831813.4
(22) Date of filing: 26.04.2013
(51) Int. Cl.: B23K 26/00, B23K 26/06

(54) **CURVATURE CONTROL DEVICE AND LASER PROCESSING MACHINE**
KRÜMMUNGSSTEUERUNGSVORRICHTUNG UND LASERBEARBEITUNGSMASCHINE
DISPOSITIF DE COMMANDE DE COURBURE ET MACHINE DE TRAITEMENT AU LASER

(43) Date of publication of application: 24.12.2014
(73) Proprietor: Mitsubishi Electric Corporation, Chiyoda-ku Tokyo 100-8310 (JP)
(72) Inventor: NISHIO, Akinori, Tokyo 100-8310 (JP)
(74) Representative: Hoffmann Eitle
(86) International application number: PCT/JP2013/062343
(87) International publication number: WO 2014/174659

(56) References cited:
- EP-A1- 1 700 665
- JP-A- 2000 084 689
- JP-A- 2006 247 676
- JP-A- 2012 024 773

## Description

### Field

The present invention relates to curvature control device and laser beam machine for controlling a beam diameter or a beam divergence angle of laser light by controlling a curvature of a variable curvature mirror. Background

A laser beam machine has variations in machine difference of a beam diameter and a beam divergence angle because of variation in surface accuracy of a laser light return reflecting mirror set in an optical path, variation in a beam generated from a laser oscillator, and the like.

For the purpose of reducing the variations in the beam diameter, the beam divergence angle and the like, a strict surface accuracy standard is set for a reflecting mirror and a lens used in the laser beam machine. In a laser beam machine described in Patent Literature 1, a variable curvature mirror is set in an optical path of the laser beam machine, and the diameter of a laser beam made incident on a condensing lens and a spot diameter or a focal length after light condensing are adjusted according to a laser beam machining condition.

### Citation List

### Patent Literature

Patent Literature 1: Japanese Patent Application Laid-Open No. 2000-8468

The preamble of claim 1 is based on the document EP 1 700 665 A1.

### Summary

### Technical Problem

However, in the above related art, because variations occur in the beam diameter and the beam divergence angle, it has been necessary to set a margin for a machining condition. That is, for the purpose of allowing the variations in the beam diameter, the beam divergence angle and the like among machines, a margin is set for a machining condition input to a machine control device. Therefore, because machining cannot be performed under a best machining condition, there has been a problem in that machining speed decreases and stability of machining is deteriorated.

In the related art, taking into account the fact that the beam diameter and the beam divergence angle significantly vary among the machines, it is necessary to use a reflecting mirror and a lens each having a strict surface accuracy standard. Therefore, there has been a problem in that machining costs for optical components increase.

The present invention has been devised in view of the above-mentioned circumstances and its object is to obtain a curvature control device and a laser beam machine for performing stable laser beam machining at high speed and low cost.

### Solution to Problem

In order to solve the above-mentioned problems and achieve the object, the present invention provides a curvature control device comprising a correction-command output section configured to generate, based on a beam correction value for correcting a beam characteristic concerning a beam diameter, a beam divergence angle, or a focal position of laser light applied by a laser beam machine, a curvature correction command for correcting a curvature of a variable curvature mirror, and output the generated curvature correction command to a variable curvature unit adapted to change the curvature of the variable curvature mirror, wherein the beam correction value is a value calculated based on the beam characteristic and a beam characteristic reference value set for each model of the laser beam machine, and the correction-command output section generates, when the laser beam machine applies the laser light, a curvature correction command for setting the beam characteristic of the applied laser light to a value equal to the beam characteristic reference value.

### Advantageous Effects of Invention

According to the present invention, there is produced an effect that it is possible to perform stable laser beam machining at high speed and low cost.

### Brief Description of Drawings

FIG. 1 is a diagram for explaining a concept of a laser beam machining process according to a first embodiment.
FIG. 2 is a diagram schematically showing a configuration of a laser beam machine according to the first embodiment.
FIG. 3 is a block diagram showing the configuration of a curvature control device according to the first embodiment.
FIG. 4 is a diagram showing the configuration of a variable curvature unit.
FIG. 5 is an illustration showing the configuration of a variable curvature mirror.
FIG. 6-1 is a diagram for explaining a relation between a curvature change and a beam diameter change that occur when the variable curvature mirror is convex.
FIG. 6-2 is a diagram for explaining a relation between a curvature change and a beam diameter change that occur when the variable curvature mirror is concave.
FIG. 7 is a diagram for explaining a measuring method for a beam diameter.
FIG. 8 is a block diagram showing the configuration of a curvature control device according to a second embodiment.
FIG. 9 is a block diagram showing the configuration of a curvature control device according to a third embodiment.
FIG. 10 is a block diagram showing the configuration of a curvature control device according to a fourth embodiment.

### Description of Embodiments

Curvature control devices and laser beam machines according to embodiments of the present invention are described in detail below with reference to the drawings. Note that the present invention is not limited by the embodiments.

### First Embodiment.

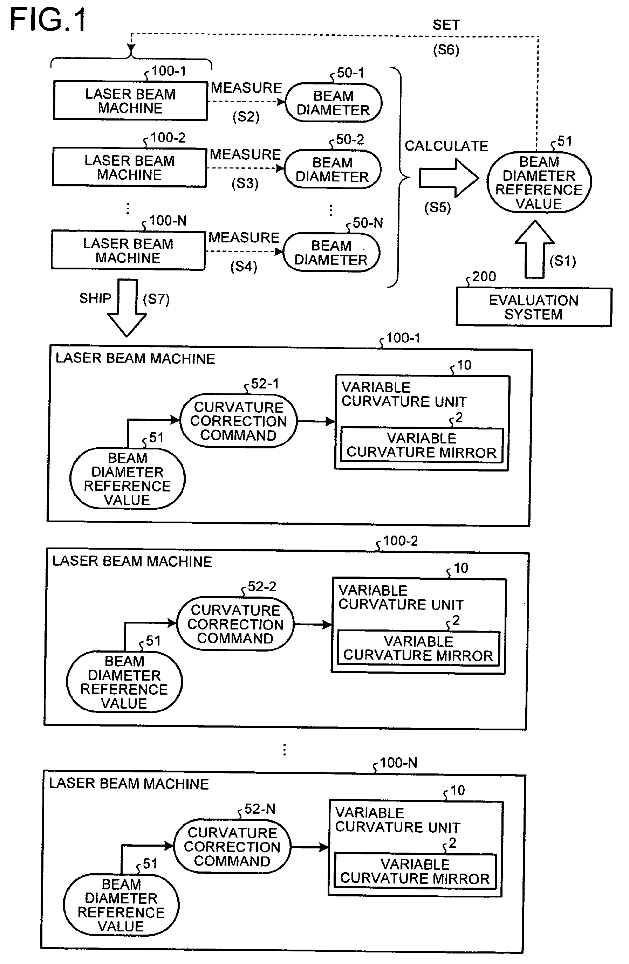

FIG. 1 is a diagram for explaining a concept of a laser beam machining process according to a first embodiment. Laser beam machines 100-1 to 100-N (N is a natural number equal to or larger than 2) in this embodiment are apparatuses that perform laser beam machining on a work (a workpiece 30 described later) after correcting the curvature of a variable curvature mirror 2. In this example, the laser beam machines 100-1 to 100-N are of the same model.

A beam characteristic reference value, which is a reference value of a beam characteristic, is an arbitrary value set in a development stage of a laser beam machine. A beam diameter reference value 51 is calculated for each of models of the laser beam machines. Because the beam characteristic in this example is beam diameter, the beam diameter reference value 51 that is a reference value of the beam diameter is calculated using an evaluation system 200 or the like (S1). The evaluation system 200 is, for example, a prototype model of a laser beam machine, a measuring apparatus for a beam characteristic, a computer and the like.

The beam characteristic reference value can be set using the manufactured laser beam machines 100-1 to 100-N. In this case, as beam characteristics of laser light rays irradiated from the laser beam machines 100-1 to 100-N, beam diameters 50-1 to 50-N are measured (S2 to S4). Thereafter, a beam characteristic reference value, that is a reference value of a beam characteristic, is calculated using the measurement results (the beam diameters 50-1 to 50-N) (S5).

The calculated beam diameter reference value 51 is set in the laser beam machines 100-1 to 100-N (S6). Thereafter, the laser beam machines are shipped (S7). In other words, adjustment of a beam diameter is performed by setting the beam diameter reference value 51 in the laser beam machines 100-1 to 100-N to be shipped. When the laser beam machines 100-1 to 100-N are used, a beam correction value for correcting the beam characteristics is calculated using the beam diameter reference value 51. Further, a curvature correction command is generated using the beam correction value.

For example, in the laser beam machine 100-1, a curvature correction command 52-1 is generated. In the laser beam machine 100-2, a curvature correction command 52-2 is generated. In the laser beam machine 100-N, a curvature correction command 52-N is generated. The curvature correction commands are sent to a variable curvature unit 10 to correct beam characteristics (beam diameters, etc.) of the laser light rays applied from the laser beam machines 100-1 to 100-N. Note that a manufacturer or a user of the laser beam machines 100-1 to 100-N may generate the curvature correction commands 52-1 to 52-N.

For example, in the laser beam machine 100-1, the curvature of the variable curvature mirror 2 is corrected according to the curvature correction command 52-1 such that the beam diameter 50-1 has a value same as the beam diameter reference value 51. In the laser beam machine 100-2, the curvature of the variable curvature mirror 2 is corrected according to the curvature correction command 52-2 such that the beam diameter 50-2 has a value same as the beam diameter reference value 51. In the laser beam machine 100-N, the curvature of the variable curvature mirror 2 is corrected according to the curvature correction command 52-N such that the beam diameter 50-N has a value same as the beam diameter reference value 51.

The generated curvature correction commands are sent to the variable curvature units 10. The variable curvature unit 10 changes the curvature of the variable curvature mirror 2 according to the curvature correction command. Consequently, in all the laser beam machines 100-1 to 100-N, laser light having a beam diameter same as the beam diameter reference value 51 is applied. Therefore, it is possible to suppress variations in machine difference of beam diameters caused by the laser beam machines 100-1 to 100-N.

Note that, although the beam characteristic is the beam diameter in this example, the beam characteristic may be a beam divergence angle or a focal position. Therefore, the beam correction value is intended to correct the beam characteristic concerning the beam diameter, the beam divergence angle, or the focal position.

In the following explanation, as an example of the beam characteristic, the beam characteristic is the beam diameter or the beam divergence angle. The laser beam machines 100-1 to 100-N are explained as a laser beam machine 100. The beam diameters 50-1 to 50-N are explained as a beam diameter 50. The curvature correction commands 52-1 to 52-N are explained as a curvature correction command 52.

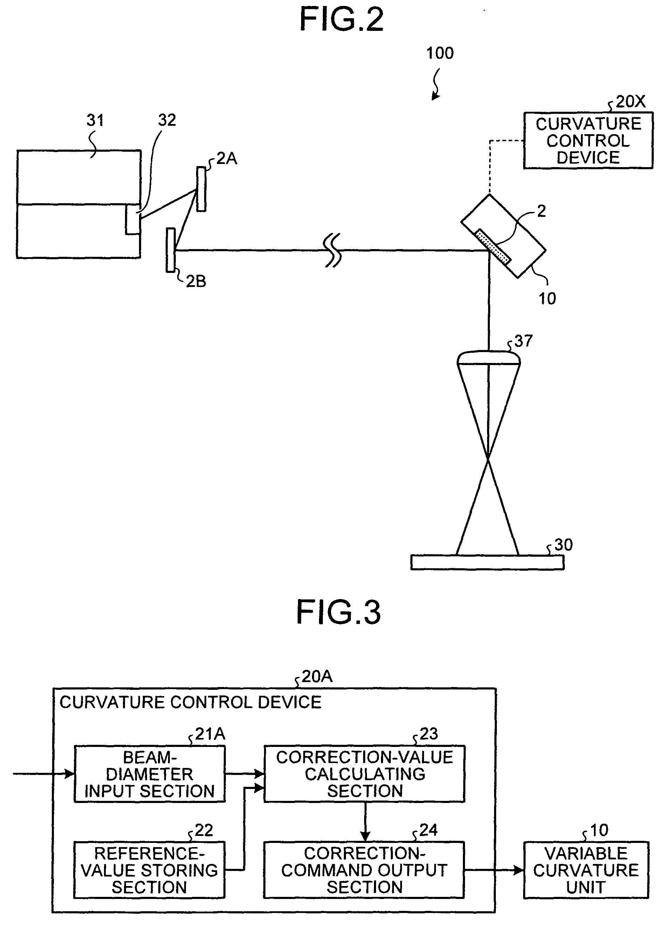

FIG. 2 is a diagram showing the schematic configuration of a laser beam machine according to the first embodiment. The laser beam machine 100 includes a laser oscillator (a laser-light output section) 31, a PR (Partial Reflection) mirror 32, bend mirrors 2A and 2B, a variable curvature unit 10 including a variable curvature mirror 2, a machining lens 37, and a curvature control device 20X.

The laser oscillator 31 is a device that causes laser light (beam light) to oscillate, such as a CO₂ laser. The laser oscillator 31 emits laser light while variously changing a laser output in laser beam machining. The PR mirror (a partial reflecting mirror) 32 partially reflects the laser light emitted by the laser oscillator 31 and leads the laser light to the bend mirror 2A.

The bend mirrors (laser light return reflecting mirrors) 2A and 2B are mirrors for changing a beam angle. The bend mirror 2A changes a beam angle of the laser light sent from the PR mirror (the partial reflecting mirror) 32 and leads the laser light to the bend mirror 2B. The bend mirror 2B changes a beam angle of and deflects the laser light sent from the bend mirror 2A and sends the laser light to the variable curvature mirror 2.

The variable curvature mirror 2 is placed in a laser propagation optical path between the laser oscillator 31 and the machining lens 37 (machining head). Note that the variable curvature mirror 2 may be applied as a reflecting mirror in the laser oscillator 31. The variable curvature mirror 2 corrects variation in the beam diameter 50 of the laser light that occurs in the laser beam machine 100.

The variable curvature mirror 2 is a mirror configured such that the curvature of the mirror is variable and configured to reflect laser light on a mirror reflection surface side. The variable curvature mirror 2 changes a beam angle, the beam diameter 50 and the like of the laser light sent from the bend mirror 2B and sends the laser light to the machining lens 37. The variable curvature mirror 2 changes the curvature of the mirror to thereby change the beam diameter 50, focal depth or the like.

The curvature control device 20X is a device that controls the curvature of the variable curvature mirror 2. The curvature control device 20X in this embodiment controls the curvature of the variable curvature mirror 2 such that the beam diameter 50 having variation in machine difference of the laser beam machine 100 becomes close to the beam diameter reference value 51 set for each of models of the laser beam machines 100. For example, when the laser beam machine 100 is to be shipped, the curvature control device 20X controls the curvature of the variable curvature mirror 2 in advance. Because the beam diameter 50 and a beam divergence angle may change due to aged deterioration of optical components (the PR mirror 32, the bend mirrors 2A and 2B, the variable curvature mirror 2, etc.), the curvature control device 20X may control the curvature of the variable curvature mirror 2 when after-the-sale service is performed.

The beam divergence angle is calculated using, for example, beam diameters measured at two points in an optical path and the distance between the two points where the beam diameters are measured. In this case, the beam diameters can be measured by any method.

Note that, when laser light is applied in a position where the distance (the height) from the machining lens 37 is the same, if the beam diameter 50 is the same, then the beam divergence angle is also the same. Incidentally, if the distance between the machining lens 37 and the workpiece 30 is set to a double distance of a focal length of the machining lens 37, laser light having a beam diameter same as the diameter of a beam made incident on the machining lens 37 is applied on the workpiece 30. In this embodiment, after a position in the height direction on which the laser light is applied is fixedly set to a position at a double distance of the focal length of the machining lens 37, the beam diameter 50 is measured. In other words, the distance between the machining lens 37 and the workpiece 30 is set to a double of the focal length of the machining lens 37.

Note that the distance between the machining lens 37 and the workpiece 30 is not limited to the double distance of the focal length of the machining lens 37 and may be any distance. Even if the beam diameter 50 is measured in a position that is not the position at the double distance of the focal length, the beam diameter 50 in the incidence on the condensing lens 37 can be calculated from a similar relational expression. Therefore, the beam diameter 50 may be measured in any position between the machining lens 37 and the workpiece 30. The laser beam machine 100 corrects the beam diameter 50 based on a measurement result of the beam diameter 50 to thereby correct both of the beam diameter 50 and the beam divergence angle to desired values. Note that the curvature of the variable curvature mirror 2 may be controlled such that the beam divergence angle having the variation in machine difference of the laser beam machine 100 becomes close to a reference value of the beam divergence angle set for each of the models of the laser beam machines 100.

When the curvature of the variable curvature mirror 2 is controlled, the laser beam machine 100 applies laser light on a member for beam characteristic measurement (irradiation target) used in measuring the beam diameter 50. Then, the beam.diameter 50 is measured with respect to a laser light irradiation trace formed by the irradiation of the laser light. In this embodiment, the measured beam diameter 50 is inputted to the curvature control device 20X. Consequently, the curvature control device 20X generates, based on the input beam diameter 50, the curvature correction command 52 for correcting the curvature of the variable curvature mirror 2. Then, the curvature control device 20X controls the variable curvature unit 10 using the generated curvature correction command 52.

The machining lens 37 condenses the laser light sent and coming from the variable curvature mirror 2 into a small spot diameter and irradiates the workpiece 30 with the laser light. The workpiece 30 is put on a not-shown machining table and subjected to laser beam machining on the machining table.

Note that the laser beam machine 100 may be a laser beam machine intended to cut a tabular member such as sheet metal or may be a laser beam machine intended to bore a printed board or the like. The laser beam machine 100 may perform two-dimensional laser beam machining or three-dimensional laser beam machining.

In the laser beam machine 100, when the laser light is outputted from the laser oscillator 31, the laser light is sent to the variable curvature mirror 2 via the bend mirrors 2A and 2B. The variable curvature mirror 2 corrects variation in the beam diameter 50 of the laser light due to surface accuracy variations of the bend mirrors 2A and 2B, the variable curvature mirror 2, and the like, variation in the beam characteristic (the beam diameter 50) of the laser light excited in the laser oscillator 31, and surface accuracy variation of the PR mirror 32. The variable curvature mirror 2 is corrected to have a curvature corresponding to the curvature correction command 52 sent from the curvature control device 20X. Consequently, in this embodiment, the beam diameter 50 of the laser light is corrected to have an arbitrary dimension corresponding to a model of the laser beam machine 100.

The laser light, the beam diameter 50 of which has been corrected by the variable curvature mirror 2, is sent to the machining lens 37. The machining lens 37 condenses the laser light and irradiates the workpiece 30 that is a machining target with the condensed laser light.

FIG. 3 is a block diagram showing the configuration of a curvature control device according to the first embodiment. In FIG. 3, the configuration of a curvature control device 20A, which is an example of the curvature control device 20X, is shown. The curvature control device 20A includes a beam-diameter input section 21A, a reference-value storing section 22, a correction-value calculating section 23, and a correction-command output section 24.

The beam-diameter input section 21A receives the beam diameter 50 (dimension) of laser light and sends the beam diameter to the correction-value calculating section 23. The beam diameter 50 inputted to the beam-diameter input section 21A is obtained from an irradiation trace of laser light with which a member for beam characteristic measurement such as acrylic material is irradiated by the laser beam machine 100. The beam diameter 50 is, for example, the diameter of the irradiation trace.

Note that the member for beam characteristic measurement may be any member as long as the member is a material on which a laser light irradiation trace can be formed by irradiating the material with the laser light and by which the beam diameter 50 can be measured, such as heat sensitive paper or wood material. In the following explanation, the member for beam characteristic measurement is acrylic material and an irradiation trace of laser light is an acrylic burned pattern.

The reference-value storing section 22 is a memory or the like configured to store the beam diameter reference value 51 corresponding to the model of the laser beam machine 100. For example, when the laser beam machine 100 is to be shipped, the beam diameter reference value 51 is stored in the reference-value storing section 22 in advance. The beam-diameter reference value 51 is, for example, a value set in a development stage. Note that the beam diameter reference value 51 may be an average or the like of the beam diameters 50-1 to 50-N obtained from the laser beam machines 100-1 to 100-N of the model same as the laser beam machine 100.

Note that, for example, after the shipment of the laser beam machine 100, the user may store the beam diameter reference value 51 in the reference-value storing section 22. The curvature control device 20A may be configured to be capable of rewriting the beam diameter reference value 51 in the reference-value storing section 22 to an arbitrary value.

The correction-value calculating section 23 calculates, based on the beam diameter 50 sent and coming from the beam-diameter input section 21A and the beam diameter reference value 51 in the reference-value storing section 22, a beam diameter correction value for correcting the beam diameter 50. The beam diameter correction value is a correction value for correcting the curvature of the variable curvature mirror 2.

The correction-value calculating section 23 calculates a beam diameter correction value such that the beam diameter 50 obtained from the laser beam machine 100 and the beam diameter reference value 51 are the same when the curvature of the variable curvature mirror 2 is corrected using the beam diameter correction value. In other words, the correction-value calculating section 23 calculates a beam diameter correction value for correcting a difference between the beam diameter 50 obtained from the laser beam machine 100 and the beam diameter reference value 51. For example, the correction-value calculating section 23 calculates the difference between the beam diameter 50 and the beam diameter reference value 51 as the beam diameter correction value.

The beam diameter 50 sent and coming from the beam-diameter input section 21A is the beam diameter 50 peculiar to the laser beam machine 100. The beam diameter reference value 51 is a beam diameter peculiar to the model of the laser beam machine 100. In this embodiment, the beam diameter correction value is calculated such that the beam diameter 50 peculiar to the laser beam machine 100 is the beam diameter (the beam diameter reference value 51) corresponding to the model of the laser beam machine 100. The correction-value calculating section 23 sends the calculated beam diameter correction value to the correction-command output section 24.

The correction-command output section 24 generates and outputs the curvature correction command 52 for the variable curvature unit 10 based on the beam diameter correction value sent from the correction-value calculating section 23. The curvature correction command 52 is a command for correcting the curvature of the variable curvature mirror 2. The correction-command output section 24 generates the curvature correction command 52 using, for example, a data table or a relational expression that indicates a correspondence relation between the beam diameter correction value and the curvature correction command 52.

The correction-command output section 24 outputs a voltage applied to an actuator (an actuator 6 explained below) included in the variable curvature unit 10 to the variable curvature unit 10 as the curvature correction command 52. The curvature correction command 52 is an offset command value for the variable curvature unit 10. The curvature correction command 52 is sent to the variable curvature unit 10, whereby the curvature of the variable curvature mirror 2 is changed such that the beam diameter becomes equal to the beam diameter reference value 51.

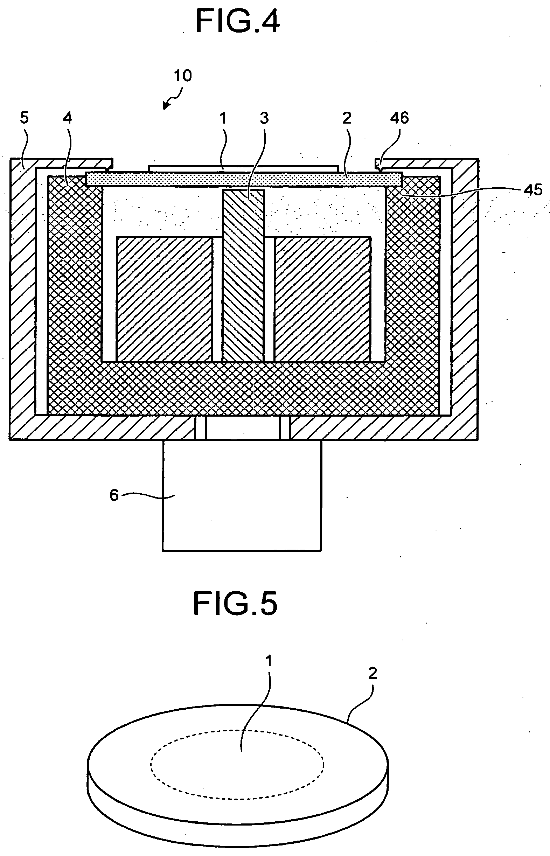

FIG. 4 is a diagram showing the configuration of the variable curvature unit. In FIG. 4, a sectional view of the variable curvature unit 10 is shown. The variable curvature unit 10 is a unit configured to change the curvature (the fashion of bending) of the variable curvature mirror 2 formed using a substantially disc-like member.

The variable curvature unit 10 includes a sensor 3, an inner mirror support 4, an outer mirror support 5, and an actuator 6. The inner mirror support 4 and the outer mirror support 5 are respectively configured using bottomed cylindrical members.

The inner mirror support 4 includes a supporting section 45 on an upper surface section side of a sidewall surface constituting the bottomed cylindrical member. The supporting section 45 is in contact with the variable curvature mirror 2 in an outer circumferential section of a bottom surface section of the variable curvature mirror 2.

An inner wall surface of the outer mirror support 5 is configured to be larger than an outer wall surface of the inner mirror support 4. The outer mirror support 5 is set on the outer side of the inner mirror support 4 to surround the inner mirror support 4. The outer mirror support 5 includes, on the upper surface section side of the bottomed cylindrical member, a tabular ring-like member joined to the sidewall surface, that extends perpendicularly to the sidewall surface. A depressing section 46 is provided on the bottom surface side of the ring-like member. The depressing section 46 is in contact with the variable curvature mirror 2 in an outer circumferential section of an upper surface section of the variable curvature mirror 2. The supporting section 45 and the depressing section 46 are configured such that the supporting section 45 is in contact with the variable curvature mirror 2 on the outer circumferential side of the variable curvature mirror 2 on an outer side of the depressing section 46.

With this configuration, the variable curvature mirror 2 is sandwiched between the inner mirror support 4 and the outer mirror support 5. Specifically, the outer circumferential section on the bottom surface side of the variable curvature mirror 2 is pressed against the supporting section 45 of the inner mirror support 4. The outer circumferential section on the upper surface side of the variable curvature mirror 2 is pressed against the depressing section 46 of the outer mirror support 5.

The actuator 6 moves the inner mirror support 4 in a direction perpendicular to the principal plane of the variable curvature mirror 2. When the curvature of the variable curvature mirror 2 is changed, the actuator 6 moves the inner mirror support 4 to the variable curvature mirror 2 side. Consequently, the bottom surface of the variable curvature mirror 2 is pushed up by the supporting section 45, and the upper surface of the variable curvature mirror 2 is borne down by the depressing section 46. As a result, the variable curvature mirror 2 is deformed into a concave shape (a cup shape) and the curvature changes. Note that, in the variable curvature unit 10, the variable curvature mirror 2 may be deformed into a convex shape.

The sensor 3 is set on the bottom surface section side of the variable curvature mirror 2 and detects the curvature of the variable curvature mirror 2. Note that the configuration of the variable curvature unit 10 is not limited to the configuration shown in FIG. 4. The variable curvature unit 10 can have any configuration as long as the configuration gives a curvature to the variable curvature mirror 2. For example, the structures and forms of driving systems of the inner mirror support 4, the outer mirror support 5, the supporting section 45, and the depressing section 46 can be any structures and any driving systems.

A curvature shape of the variable curvature mirror 2 on its mirror surface may be either spherical or aspherical. The variable curvature mirror 2 may be applied to the bend mirrors 2A and 2B. The variable curvature mirror 2 may be applied to the reflecting mirror in the laser oscillator 31.

FIG. 5 is an illustration showing the configuration of the variable curvature mirror. In FIG. 5, a perspective view of the variable curvature mirror 2 is shown. The variable curvature mirror 2 is configured using a substantially disc-like mirror base material. A reflecting film 1 having a circular region is formed on the mirror reflection surface side. The center of the reflecting film 1 is substantially identical with the center of a mirror reflection surface of the mirror base material. The region where the reflecting film 1 is formed may be a region smaller than the mirror reflection surface or may be a region same as the mirror reflection surface.

Note that, when an output of the laser light made incident on the variable curvature mirror 2 is low, the formation of the reflecting film 1 may be omitted and gold only has to be vapor-deposited on the mirror reflection surface. In this case, a thin film of gold is formed in the position of the reflecting film 1 on the mirror reflection surface.

The variable curvature mirror 2 changes the curvature, whereby a focal position, the beam diameter 50, and a beam divergence angle of the laser light applied on the workpiece 30 change. A relation between a curvature change of the variable curvature mirror 2 and a beam diameter change is explained.

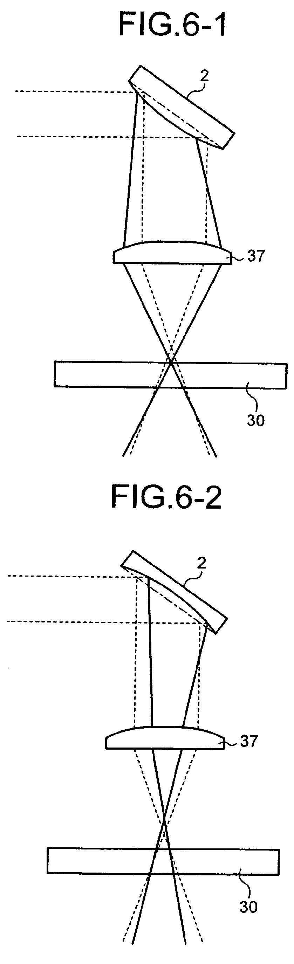

FIG. 6-1 and FIG. 6-2 are diagrams for explaining a relation between the curvature change of the variable curvature mirror and the beam diameter change. FIG. 6-1 shows a case where the variable curvature mirror 2 is convex, while FIG. 6-2 shows another case where the variable curvature mirror 2 is concave.

As shown in FIG. 6-1, laser light applied on the workpiece 30 via a convex variable curvature mirror 2 has a focal position more distant than in the case where laser light taking on parallel light is applied on the workpiece 30. As a result, when the laser light is reflected by the convex variable curvature mirror 2, the beam diameter 50 of the laser light is larger after the reflection than before the reflection.

On the other hand, as shown in FIG. 6-2, laser light applied on the workpiece 30 via the concave variable curvature mirror 2 has a focal position closer than in the case where laser light taking on parallel light is applied on the workpiece 30. As a result, when the laser light is reflected by the concave variable curvature mirror 2, the beam diameter 50 of the laser light is smaller after the reflection than before the reflection.

As explained above, the curvature of the variable curvature mirror 2 is changed, whereby it is possible to change the beam diameter 50 of the laser light applied on the workpiece 30 in the same manner as in the case where the position of the machining lens 37 is changed.

A general optical component such as the variable curvature mirror is required to have high surface accuracy of the mirror reflection surface in order to prevent characteristics of light from changing. In this embodiment, because the laser light is corrected to the beam diameter 50 corresponding to the model of the laser beam machine 100, the optical components such as the reflection mirrors (the PR mirror 32 and the bend mirrors 2A and 2B) and the lens are not required to have high surface accuracy. Therefore, it is possible to configure the laser beam machine 100 using inexpensive optical components.

Note that the variable curvature mirror 2 is not limited to the substantially disc-like shape and may have any shape. For example, the variable curvature mirror 2 may be formed using a tabular member or elliptical tabular member having a polygonal principal surface. A hollow region may be provided on the bottom surface side or in the mirror of the variable curvature mirror 2.

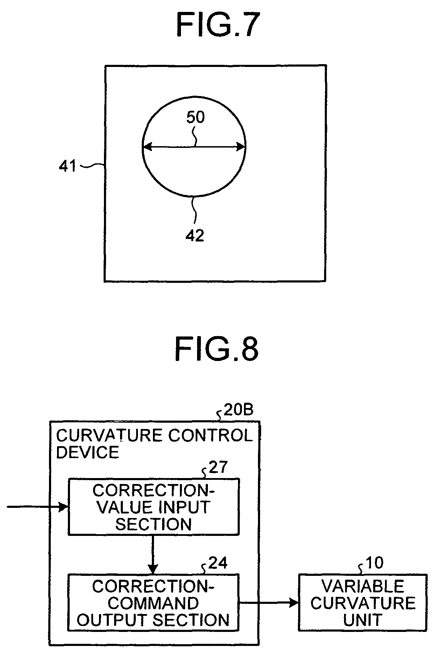

Next, a measuring method for the beam diameter 50 is explained. FIG. 7 is a diagram for explaining a measuring method for a beam diameter. When the laser beam machine 100 measures the beam diameter 50 of laser light applied on the workpiece 30, the laser beam machine 100 irradiates an acrylic 41 with the laser light. At this point, the acrylic 41 is placed below a machining head (the machining lens 37) (in a position where the workpiece 30 is placed). Then, the laser light is applied on the acrylic 41 for a few seconds, for example.

Consequently, the acrylic 41 is melted and an acrylic burned pattern 42 is formed. The diameter of the acrylic burned pattern 42 is measured, whereby the beam diameter 50 of the laser beam machine 100 can be obtained. The beam diameter 50 often has a difference from a standard beam diameter (an ideal value). Note that a position where the beam diameter 50 of the laser light is measured (herein, a placement position of the acrylic 41) may be any position as long as the position is ahead of the variable curvature mirror 2 (on a latter part side of the optical path).

In the above explanation, the diameter of one place is measured for the acrylic burned pattern 42. However, the diameters of a plurality of places may be measured for the acrylic burned pattern 42. In this case, for example, an average of the measured diameters is set as a beam diameter of the laser beam machine 100.

The beam diameter reference value 51 set for each model of laser beam machine 100 is calculated using the beam diameter 50 measured by a method same as the method described with reference to FIG. 7. When the laser beam machine 100 is manufactured, a plurality of laser beam machines of a model same as that of the laser beam machine 100 are caused to form acrylic burned patterns 42. The beam diameter reference value 51 is calculated using beam diameters 50 obtained from the acrylic burned patterns 42. The beam diameter reference value 51 is, for example, a value set in a design stage or an average of the beam diameters 50 obtained from the acrylic burned patterns 42. The calculated beam diameter reference value 51 is beforehand stored in reference-value storing sections 22 of the laser beam machine 100 and the laser beam machines of the model same as that of the laser beam machine 100.

As explained above, according to the first embodiment, the beam diameter 50 is corrected to be close to the beam diameter reference value 51 set for each model of the laser beam machine 100. Therefore, it is unnecessary to set a margin for a machining condition. Therefore, because machining can be performed under a best machining condition, it is possible to perform stable laser beam machining without causing a machining speed to decrease. Because the beam diameter 50 can be prevented from varying, it is unnecessary to use optical components having strict surface accuracy criteria. Therefore, it is possible to reduce machining costs for the optical components.

Therefore, it is possible to perform the stable laser beam machining at high speed and low costs. Because the stable laser beam machining can be performed, yield is improved, and at the same time condition adjustment to be done by a machine operator is unnecessary.

### Second Embodiment.

Now, a second embodiment of the present invention is described with reference to FIG. 8. In the second embodiment, a beam diameter correction value is calculated in advance using the beam diameter 50 acquired from the laser beam machine 100. Then, the calculated beam diameter correction value is manually inputted to the laser beam machine.

FIG. 8 is a block diagram showing the configuration of a curvature control device according to the second embodiment. In FIG. 8, the configuration of a curvature control device 20B, that is one example of the curvature control device 20X, is shown. Note that, among composition elements shown in FIG. 8, elements attaining functions same as the functions of the curvature control device 20A in the first embodiment shown in FIG. 3 are denoted by the same reference numerals and redundant explanation thereof is omitted.

The curvature control device 20B includes a correction-value input section 27 and the correction-command output section 24. The correction-value input section 27 receives a beam diameter correction value and sends the beam diameter correction value to the correction-command output section 24. The beam diameter correction value is manually inputted to the correction-value input section 27 via a mouse, a keyboard, or the like.

The beam diameter correction value inputted to the correction-value input section 27 is the same as the beam diameter correction value calculated by the correction-value calculating section 23. In other words, the beam diameter correction value is calculated based on the beam diameter 50 and the beam diameter reference value 51.

The correction-command output section 24 generates and outputs the curvature correction command 52 for the variable curvature unit 10 based on the beam diameter correction value sent and coming from the correction-value input section 27. Note that the beam diameter correction value inputted to the correction-value input section 27 can not achieve correction for a desired beam diameter corresponding to the beam diameter reference value 51. In such a case, the curvature of the variable curvature mirror 2 is changed by trial and error. Specifically, the following processes are repeated.
(1) Input of a beam diameter correction value corresponding to a measurement result of the beam diameter 50
(2) Generation of the curvature correction command 52 corresponding to the beam diameter correction value
(3) Measurement of the beam diameter 50 after changing a curvature based on the curvature correction command 52
(4) Check, based on the measurement result, whether the beam diameter 50 is the desired beam diameter

In the laser beam machine 100, the processing of (1) to (4) described above is repeated until the correction to the desired beam diameter corresponding to the beam diameter reference value 51 is achieved. Note that, in the explanation of this embodiment, the beam diameter correction value is manually inputted. However, the curvature correction command 52 may be manually inputted.

As explained above, according to the second embodiment, as with the first embodiment, it is possible to perform stable laser beam machining at high speed and low costs. Because the reference-value storing section 22 and the correction-value input section 27 are unnecessary, it is possible to perform laser beam machining using the curvature control device 20B that is more inexpensive than the curvature control device 20A.

### Third Embodiment.

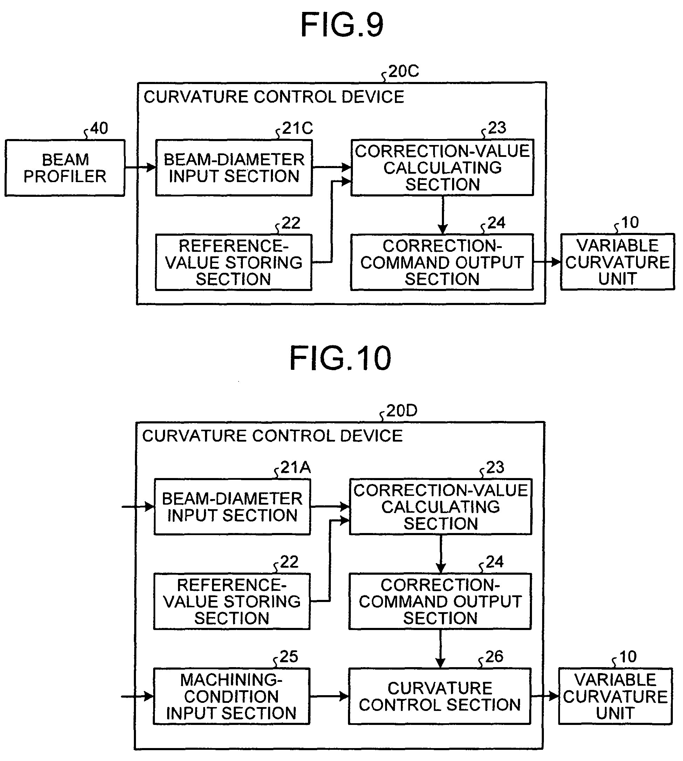

Next, a third embodiment of the present invention is described with reference to FIG. 9. In the third embodiment, the beam diameter 50 of the laser beam machine 100 is measured using a beam profiler. The measured beam diameter 50 is inputted to the laser beam machine 100.

FIG. 9 is a block diagram showing the configuration of a curvature control device according to the third embodiment. In FIG. 9, the configuration of a curvature control device 20C, that is one example of the curvature control device 20X, is shown. Note that, among constituent elements shown in FIG. 9, elements attaining functions same as the functions of the curvature control device 20A in the first embodiment shown in FIG. 3 are denoted by the same reference numerals and redundant explanation thereof is omitted.

The curvature control device 20C includes a beam-diameter input section 21C, the reference-value storing section 22, the correction-value calculating section 23, and the correction-command output section 24. The beam-diameter input section 21C is connected to a beam profiler 40. The beam profiler 40 is a device that measures the beam diameter 50 of laser light applied by the laser beam machine 100. The beam profiler 40 sends the measured beam diameter 50 to the beam-diameter input section 21C.

The beam-diameter input section 21C receives the beam diameter 50 and sends the beam diameter 50 to the correction-value calculating section 23. Consequently, the correction-value calculating section 23 calculates a beam diameter correction value based on the beam diameter 50 sent from the beam-diameter input section 21C and the beam diameter reference value 51 in the reference-value storing section 22. The correction-command output section 24 generates the curvature correction command 52 based on the beam diameter correction value calculated by the correction-value calculating section 23 and outputs the curvature correction command 52 to the variable curvature unit 10.

Note that the beam profiler 40 may be configured to measure a spot diameter or a focal position at a light condensing point of the laser light transmitted through the machining lens 37. In this case, a difference between a measurement value of the spot diameter and the beam diameter reference value 51 or a difference between a measurement value of the focal position and a reference value of the focal position set in advance is corrected by curvature control of the variable curvature mirror 2.

As explained above, according to the third embodiment, as with the first embodiment, it is possible to perform stable laser beam machining at high speed and low costs. Because the beam diameter measured using the beam profiler 40 is inputted to the beam-diameter input section 21C, it is possible to perform the laser beam machining with simple operation. When the beam profiler 40 is used, by setting the beam profiler 40 to periodically measure a beam diameter, correction work for the beam diameter is unnecessary.

### Fourth Embodiment.

A fourth embodiment of the present invention is explained with reference to FIG. 10. In the fourth embodiment, both of curvature control for correcting variation in a beam diameter and curvature control according to a machining condition are performed by a curvature control device.

FIG. 10 is a block diagram showing the configuration of a curvature control device according to the fourth embodiment. In FIG. 10, the configuration of a curvature control device 20D, that is one example of the curvature control device 20X, is shown. Note that, among constituent elemnents shown in FIG. 10, elements attaining functions same as the functions of the curvature control device 20A in the first embodiment shown in FIG. 3 are denoted by the same reference numerals and redundant explanation thereof is omitted.

The curvature control device 20D includes a machining-condition input section 25 and a curvature control section 26 in addition to the beam-diameter input section 21A, the reference-value storing section 22, the correction-value calculating section 23, and the correction-command output section 24. The correction-command output section 24 in this embodiment sends the generated curvature correction command 52 to the curvature control section 26.

The machining-condition input section 25 receives a machining condition and sends the machining condition to the curvature control section 26. The machining condition is the thickness, the quality of material, or the like of the workpiece 30. The curvature control section 26 generates a curvature change command based on the machining condition. The curvature change command is a command for changing the curvature of the variable curvature mirror 2.

The curvature control section 26 sends a combined command of the curvature correction command 52 and the curvature change command to the variable curvature unit 10. Consequently, a curvature change according to the curvature correction command 52 and a curvature change according to the machining condition are performed in the variable curvature unit 10. Note that the machining-condition input section 25 and the curvature control section 26 may be set in the curvature control devices 20A to 20C.

As explained above, according to the fourth embodiment, as with the first embodiment, it is possible to perform stable laser beam machining at high speed and low costs. Because the curvature control device 20D includes the machining-condition input section 25 and the curvature control section 26, it is possible to perform curvature control corresponding to a machining condition.

### Industrial Applicability

As explained above, the curvature control device and the laser beam machine according to the present invention are suitable for correction of a beam diameter of laser light.

### Reference Signs List

- 2: Variable curvature mirror
- 6: Actuator
- 10: Variable curvature unit
- 20A to 20D, 20X: Curvature control device
- 21A, 21C: Beam-diameter input section
- 22: Reference-value storing section
- 23: Correction-value calculating section
- 24: Correction-command output section
- 25: Machining-condition input section
- 26: Curvature control section
- 27: Correction-value input section
- 30: Workpiece
- 31: Laser oscillator
- 37: Machining lens
- 40: Beam profiler
- 41: Acrylic
- 42: Acrylic burned pattern
- 50: Beam diameter
- 100: Laser beam machine

## Claims

1. A curvature control device (20X) for controlling the curvature of a variable curvature mirror (2) comprised in a variable curvature unit (10), said curvature control device comprising a correction-command output section (24) configured to generate, based on a beam correction value for correcting a beam characteristic concerning a beam diameter, a beam divergence angle, or a focal position of laser light applied by a laser beam machine (100), a curvature correction command for correcting a curvature of a variable curvature mirror (2), and output the generated curvature correction command to a variable curvature unit (10) adapted to change the curvature of the variable curvature mirror (2), **characterized in that**
the beam correction value is a value calculated based on the beam characteristic and a beam characteristic reference value set for each model of the laser beam machine (100), and
the correction-command output section (24) generates, when the laser beam machine (100) applies the laser light, the curvature correction command such that the beam characteristic of the applied laser light is set to a value equal to the beam characteristic reference value.

2. The curvature control device (20X) according to claim 1, wherein the beam characteristic reference value is calculated using a beam characteristic of laser light applied by a laser beam machine (100) of a model same as that of the laser beam machine (100).

3. The curvature control device (20X) according to claim 1 or 2, further comprising:
a beam-characteristic input section (21A) configured to input the beam characteristic;
a reference-value storing section (22) configured to prestore the beam-characteristic reference value; and
a correction-value calculating section (23) configured to calculate the beam correction value based on the beam characteristic and the beam characteristic reference value, wherein
the correction-command output section (24) generates the curvature correction command based on the beam correction value calculated by the correction-value calculating section (23).

4. The curvature control device (20C) according to claim 3, wherein a beam characteristic measured by a beam profiler (40) is inputted to the beam-characteristic input section (21C).

5. The curvature control device (20X) according to claim 4, wherein the beam characteristic measured by the beam profiler (40) is a beam diameter, a focal position, or a spot diameter at a light condensing point of the laser light transmitted through a machining lens (37).

6. The curvature control device (20B) according to claim 1 or 2, further comprising a correction-value input section (27) configured to receive the beam correction value, wherein
the correction-command output section (24) generates the curvature correction command based on a beam characteristic reference value inputted from the correction-value input section (27).

7. The curvature control device (20X) according to any one of claims 1 to 3, wherein the beam characteristic is measured with respect to a laser light irradiation trace formed by the laser beam machine (100) irradiating a member for beam characteristic measurement with the laser light.

8. The curvature control device (20X) according to claim 7, wherein the member for beam characteristic measurement is a material capable of forming the laser light irradiation trace by the irradiation of the laser light.

9. The curvature control device (20X) according to claim 8, wherein the member for beam characteristic measurement is acrylic, heat sensitive paper, or wood material.

10. The curvature control device (20X) according to any one of claims 1 to 9, wherein the correction-command output section (24) generates the curvature correction command using a data table or a relational expression that indicates a correspondence relation between the beam correction value and the curvature correction command.

11. A laser beam machine (100) comprising:
a variable curvature mirror (2);
a variable curvature unit (10) adapted to change a curvature of the variable curvature mirror (2); and
a curvature control device (20X) configured to control the variable curvature unit (10) according to any one of claims 1 to 10.

## Patentansprüche

1. Krümmungssteuerungsvorrichtung (20X) zum Steuern der eines krümmungsvariablen Spiegels (2), der in einer Krümmungsveränderungseinheit (10) enthalten ist, wobei die Krümmungssteuerungsvorrichtung eine Korrekturanweisung-Ausgabeabteilung (24) aufweist, die auf der Grundlage eines Strahlkorrekturwertes zum Korrigieren einer Strahlkenngröße, die einen Strahldurchmesser, einen Strahldivergenzwinkel oder einer Fokuslage von Laserlicht betrifft, das durch eine Laserstrahlmaschine (100) angewendet wird, eingerichtet ist, eine Krümmungskorrekturanweisung zum Korrigieren einer Krümmung eines krümmungsvariablen Spiegels (2) zu erzeugen und die erzeugte Krümmungskorrekturanweisung an eine Krümmungsveränderungseinheit (10) auszugeben, die geeignet ist, die Krümmung des krümmungsvariablen Spiegels (2) zu verändern, **dadurch gekennzeichnet, dass**
der Strahlkorrekturwert ein Wert ist, der auf der Grundlage der Strahlkenngröße und eines Strahlkenngrößen-Bezugswertsatzes für jedes Modell der Laserstrahlmaschine (100) berechnet wird, und
die Korrekturanweisung-Ausgabeabteilung (24) dann, wenn die Laserstrahlmaschine (100) das Laserlicht anwendet, die Krümmungskorrekturanweisung derart erzeugt, dass die Strahlkenngröße des angewendeten Laserlichts auf einen Wert festgelegt wird, der gleich dem Strahlkenngrößen-Bezugswert ist.

2. Krümmungssteuerungsvorrichtung (20X) nach Anspruch 1, wobei der Strahlkenngrößen-Bezugswert unter Verwendung einer Strahlkenngröße des Laserlichts berechnet wird, das durch eine Laserstrahlmaschine (100) eines gleichen Modells wie das der Laserstrahlmaschine (100) angewendet wird.

3. Krümmungssteuerungsvorrichtung (20X) nach Anspruch 1 oder 2, ferner mit:
einer Strahlkenngrößen-Eingabeabteilung (21A), die eingerichtet ist zum Eingeben der Strahlkenngröße,
einer Bezugswertspeicherabteilung (22), die eingerichtet ist zum Vorspeichern des Strahlkenngrößen-Bezugswertes und
einer Korrekturwert-Berechnungsabteilung (23), die eingerichtet ist zum Berechnen des Strahlkorrekturwertes auf Basis der Strahlkenngröße und des Strahlkenngrößen-Bezugswertes, wobei
die Korrekturanweisung-Ausgabeabteilung (24) die Krümmungskorrekturanweisung auf der Grundlage des Strahlkorrekturwertes berechnet, der durch die Korrekturwert-Berechnungsabteilung (23) berechnet wurde.

4. Krümmungssteuerungsvorrichtung (20C) nach Anspruch 3, wobei eine Strahlkenngröße, die durch einen Strahlvermesser (40) gemessen wurde, in die Strahlkenngrößen-Eingabeabteilung (21C) eingegeben wird.

5. Krümmungssteuerungsvorrichtung (20X) nach Anspruch 4, wobei die Strahlkenngröße, die durch den Strahlvermesser (40) gemessen wurde, ein Strahldurchmesser, eine Fokuslage oder ein Fleckdurchmesser eines Lichtbündelungspunktes des Laserlichts ist, das durch eine Bearbeitungslinse (37) hindurchgeleitet wurde.

6. Krümmungssteuerungsvorrichtung (20B) nach Anspruch 1 oder 2, ferner mit einer Korrekturwert-Eingabeabteilung (27), die eingerichtet ist zum Empfangen des Strahlkorrekturwertes, wobei
die Korrekturanweisung-Ausgabeabteilung (24) die Krümmungskorrekturanweisung auf der Grundlage eines Strahlkenngrößen-Bezugswertes erzeugt, der von der Korrekturwert-Eingabeabteilung (27) eingegeben wurde.

7. Krümmungssteuerungsvorrichtung (20X) nach einem der Ansprüche 1 bis 3, wobei die Strahlkenngröße mit Bezug auf eine Laserlicht-Bestrahlungsspur gemessen wird, die von der Laserstrahlmaschine (100) ausgebildet wurde, die ein Bauteil für die Strahlkenngrößenmessung mit dem Laserlicht bestrahlt.

8. Krümmungssteuerungsvorrichtung (20X) nach Anspruch 7, wobei das Bauteil für die Strahlkenngrößenmessung ein Material ist, das in der Lage ist, die Laserlicht-Bestrahlungsspur durch die Bestrahlung mit dem Laserlicht auszubilden.

9. Krümmungssteuerungsvorrichtung (20X) nach Anspruch 8, wobei das Bauteil für die Strahlkenngrößenmessung Acryl, wärmeempfindliches Papier oder Holzmaterial ist.

10. Krümmungssteuerungsvorrichtung (20X) nach einem der Ansprüche 1 bis 9, wobei die Korrekturanweisung-Ausgabeabteilung (24) die Krümmungskorrekturanweisung unter Verwendung einer Datentabelle oder eines Beziehungsausdrucks erzeugt, der eine Übereinstimmungsbeziehung zwischen dem Strahlkorrekturwert und der Krümmungskorrekturanweisung anzeigt.

11. Laserstrahlmaschine (100) mit:
einem krümmungsvariablen Spiegel (2),
einer Krümmungsveränderungseinheit (10), die geeignet ist, eine Krümmung des krümmungsvariablen Spiegels (2) zu verändern, und
einer Krümmungssteuerungsvorrichtung (20X), die eingerichtet ist, die Krümmungsveränderungseinheit (10) gemäß einem der Ansprüche 1 bis 10 zu steuern.

## Revendications

1. Dispositif de commande de courbure (20X) destiné à commander la courbure d'un miroir à courbure variable (2) contenu dans une unité à courbure variable (10), ledit dispositif de commande de courbure comprenant une section de sortie de commande de correction (24) configurée pour produire, sur la base d'une valeur de correction de faisceau destinée à corriger une caractéristique de faisceau concernant un diamètre de faisceau, un angle de divergence de faisceau, ou une position focale d'une lumière laser appliquée par une machine d'usinage par procédé photonique (100), une commande de correction de courbure destinée à corriger une courbure d'un miroir à courbure variable (2), et pour délivrer la commande de correction de courbure produite à une unité à courbure variable (10) conçue pour modifier la courbure du miroir à courbure variable (2), **caractérisé en ce que**
la valeur de correction de faisceau est une valeur calculée sur la base de la caractéristique de faisceau et d'une valeur de référence de caractéristique de faisceau définie pour chaque modèle de la machine d'usinage par procédé photonique (100), et
la section de délivrance de commande de correction (24) produit, lorsque la machine d'usinage par procédé photonique (100) applique la lumière laser, la commande de correction de courbure de telle sorte que la caractéristique de faisceau de la lumière laser appliquée est fixée à une valeur égale à la valeur de référence de caractéristique de faisceau.

2. Dispositif de commande de courbure (20X) selon la revendication 1, dans lequel la valeur de référence de caractéristique de faisceau est calculée au moyen d'une caractéristique de faisceau d'une lumière laser appliquée par une machine d'usinage par procédé photonique (100) d'un modèle identique à celui de la machine d'usinage par procédé photonique (100).

3. Dispositif de commande de courbure (20X) selon la revendication 1 ou 2, comprenant en outre :
une section d'entrée de caractéristique de faisceau (21A) conçue pour entrer la caractéristique de faisceau ;
une section de mise en mémoire de valeur de référence (22) configurée pour préenregistrer la valeur de référence de caractéristique de faisceau ; et
une section de calcul de valeur de correction (23) configurée pour calculer la valeur de correction de faisceau basée sur la caractéristique de faisceau et la valeur de référence de caractéristique de faisceau, dans lequel
la section de sortie de commande de correction (24) produit la commande de correction de courbure basée sur la valeur de correction de faisceau calculée par la section de calcul de valeur de correction (23).

4. Dispositif de commande de courbure (20C) selon la revendication 3, dans lequel une caractéristique de faisceau mesurée par un profileur de faisceau (40) est entrée dans la section d'entrée de caractéristique de faisceau (21C).

5. Dispositif de commande de courbure (20X) selon la revendication 4, dans lequel la caractéristique de faisceau mesurée par le profileur de faisceau (40) est un diamètre de faisceau, une position focale, ou un diamètre de tache au niveau d'un point de condensation de lumière de la lumière laser transmise à travers une lentille d'usinage (37).

6. Dispositif de commande de courbure (20B) selon la revendication 1 ou 2, comprenant en outre une section d'entrée de valeur de correction (27) configurée pour recevoir la valeur de correction de faisceau, dans lequel
la section de sortie de commande de correction (24) produit la commande de correction de courbure sur la base d'une valeur de référence de caractéristique de faisceau entrée à partir de la section d'entrée de valeur de correction (27).

7. Dispositif de commande de courbure (20X) selon l'une quelconque des revendications 1 à 3, dans lequel la caractéristique de faisceau est mesurée par rapport à une trace d'irradiation de lumière laser formée par la machine d'usinage par procédé photonique (100) irradiant un élément pour la mesure de caractéristique de faisceau avec la lumière laser.

8. Dispositif de commande de courbure (20X) selon la revendication 7, dans lequel l'élément pour la mesure de caractéristique de faisceau est un matériau capable de former la trace d'irradiation avec la lumière laser au moyen de l'irradiation avec la lumière laser.

9. Dispositif de commande de courbure (20X) selon la revendication 8, dans lequel l'élément pour la mesure de caractéristique de faisceau est de l'acrylique, du papier thermosensible, ou un matériau ligneux.

10. Dispositif de commande de courbure (20X) selon l'une quelconque des revendications 1 à 9, dans lequel la section de sortie de commande de correction (24) produit la commande de correction de courbure au moyen d'une table de données ou d'une expression relationnelle qui indique une relation de correspondance entre la valeur de correction de faisceau et la commande de correction de courbure.

11. Machine d'usinage par procédé photonique (100) comprenant :
un miroir à courbure variable (2) ;
une unité à courbure variable (10) conçue pour modifier une courbure du miroir à courbure variable (2) ; et
un dispositif de commande de courbure (20X) configuré pour commander l'unité à courbure variable (10) selon l'une quelconque des revendications 1 à 10.
